# EUROPEAN PATENT APPLICATION

(11) **EP 1 909 032 A2**
(43) Date of publication of application: **09.04.2008**
(21) Application number: 07117449.4
(22) Date of filing: 28.09.2007
(51) Int. Cl.: F23R 3/34, F23R 3/28, F23R 3/14

(54) **Method and apparatus for reducing gas turbine engine emissions**

(30) Priority: 05.10.2006 US 543652
(71) Applicant: General Electric Company, Schenectady, NY 12345 (US)
(72) Inventor: Varatharajan, Balachandar, Clifton Park, NY 12065 (US); Fritz, Jassin, 80997, Muenchen (DE); Evulet, Andrei Tristan, Clifton Park, NY 12065 (US)
(74) Representative: Goode, Ian Roy

(57) **Abstract**

A method of reducing emissions in a gas turbine engine comprises generating a swirling flow (19) with a first oxygen source (36) and a first fuel (38) within a combustor; combusting (40) the first fuel using the first oxygen source to produce combustion products within the combustor; generating a swirling flow (46) with a second oxygen source (42) and a second fuel (44) and mixing with the combustion products; combusting (48) the second fuel using the second oxygen source to produce second combustion products within the combustor; and generating a swirling flow (54) with a third oxygen source (50) and a third fuel (52) and mixing with the second combustion products.

## Description

The present disclosure generally relates to gas turbine engines, and more particularly, to combustors for gas turbine engines.

A gas turbine engine generally includes a compressor and a turbine arranged on a rotating shaft(s), and a combustion section (e.g., combustor) between the compressor and the turbine. The combustion section burns a mixture of compressed air and liquid and/or gaseous fuel to generate a high-energy combustion gas stream that drives the rotating turbine. The turbine rotationally drives the compressor and provides output power. Industrial gas turbines are often used to provide output power to drive an electrical generator or motor. Other types of gas turbines may be used as aircraft engines or on-site and supplemental power generators, for example.

Air pollution concerns worldwide have led to stricter emissions standards for gas turbine engines. These standards regulate the emission of oxides of nitrogen (NOₓ) (e.g., nitric oxide (NO) and nitrogen dioxide (NO₂)), unburned hydrocarbons (UHC) and carbon monoxide (CO), which are generated as a result of gas turbine engine operation. Generally, the quantity of NOₓ produced by the gas turbine engine is related to the oxygen content of the combustion gas and typically strongly temperature dependant. A reduction in the flame temperatures can therefore significantly reduce the NOₓ emissions generated by the thermal NOₓ formation mechanism.

In gas turbine engines, attempts have been made to reduce emissions, specifically NOₓ emissions, by applying the lean premixed combustion or the use of water injection to lower the flame temperature. However, often these modifications to a gas turbine engine have an adverse effect on operating performance levels.

Accordingly, a continual need exists for improved gas turbine engines and methods for reducing emissions in gas turbine engines.

Disclosed herein are combustors for gas turbine engines and methods for reducing emissions in gas turbine engines.

In one embodiment, a combustor for a gas turbine engine comprises a housing, and a swirler assembly disposed in physical communication with the housing. The swirler assembly comprises a first stage comprising a plurality of first vanes, a second stage comprising a plurality of second vanes, and a third stage comprising a plurality of third vanes. The second stage is disposed downstream of, in fluid communication with, and in physical communication with the first stage. The third stage is disposed downstream of, in fluid communication with, and in physical communication with the second stage. A fuel injector is disposed in fluid communication with the first stage; a second fuel injector is disposed in fluid communication with the second stage; and a third fuel injector is disposed in fluid communication with the third stage.

In one embodiment, a method of reducing emissions in a gas turbine engine comprises generating a swirling flow with a first oxygen source and a first fuel within a combustor; combusting the first fuel using the first oxygen source to produce combustion products within the combustor; generating a swirling flow with a second oxygen source and a second fuel and mixing with the combustion products; combusting the second fuel using the second oxygen source to produce second combustion products within the combustor; and generating a swirling flow with a third oxygen source and a third fuel and mixing with the second combustion products.

In one embodiment, a gas turbine engine comprises a compressor; a combustor disposed downstream of and in fluid communication with the compressor, and a turbine assembly disposed downstream of the combustor. The combustor comprises a housing; and a swirler assembly disposed in physical communication with the housing. The swirler assembly comprises a first stage comprising a plurality of first vanes, a second stage comprising a plurality of second vanes, and a third stage comprising a plurality of third vanes. The second stage is disposed downstream of, in fluid communication with, and in physical communication with the first stage. The third stage is disposed downstream of, in fluid communication with, and in physical communication with the second stage. A fuel injector is disposed in fluid communication with the first stage; a second fuel injector is disposed in fluid communication with the second stage; and a third fuel injector is disposed in fluid communication with the third stage.

Embodiments of the invention will now be described, by way of example, with reference to the accompanying drawings, in which:

Figure 1 is a schematic illustration of an embodiment of a gas turbine engine;

Figure 2 is a cross sectional view of an embodiment of a swirler assembly comprising three stages of vanes; and

Figure 3 is a schematic illustration of a cross sectional view of the swirler assembly of Figure 2 taken along line 3-3.

Disclosed herein are gas turbine engines and methods for reducing emissions such as NOₓ, unburned hydrocarbons (UHC), and carbon monoxide (CO) in gas turbine engines. As will be discussed in greater detail, a combustor for a gas turbine engine comprises a swirler assembly having at least three stages of vanes. The swirler assembly can be adapted for use in annular combustors, can-annular combustors, and the like. A combustor employing the swirler assembly disclosed herein lowers emissions and increases turndown and stability when compared to a combustor that does not employ the swirler assembly.

The term "swirler assembly" as used throughout this disclosure, generically refers to an apparatus capable of generating a turbulent swirling flow that is characterized by an additional circumferential velocity component. The swirler assembly comprises at least three stages of vanes. The term co-axially is being used to generically describe two or more components sharing a common axis. Furthermore, the term "staged" is being used to generically describe the relationship between at least two components, wherein the components are spaced a distance apart from each other along an axis.

In the descriptions that follow, the term "axial" refers broadly to a direction parallel to the axis about which the rotating components of the gas turbine engine rotate. An "upstream" direction refers to the direction from which the local flow is coming, while a "downstream" direction refers to the direction in which the local flow is traveling. Thus, the inlet of the turbine is located upstream whereas the exit is on the downstream end of the turbine.

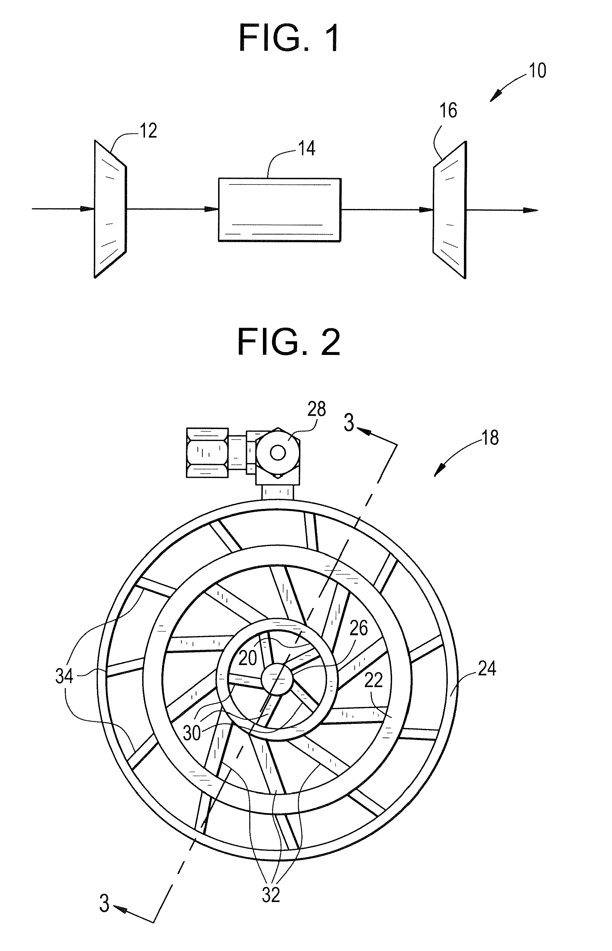

Referring now to Figure 1, a schematic illustration of an embodiment of a gas turbine engine generally designated 10 is illustrated. The gas turbine engine 10 can be employed in both mobile applications (e.g., aircrafts and tanks) and stationary applications (e.g., power plants). The gas turbine engine 10 comprises a compressor 12, a combustor 14, and a turbine assembly 16. In one embodiment, the compressor 12 is located upstream of and in fluid communication with the combustor 14, which is located upstream of and in fluid communication with the turbine assembly 16. Stated another way, the compressor 12 is in serial fluid communication with the combustor 14 and the turbine assembly 16.

The combustor 14 can be an annular combustor, can-annular combustor, or the like. The combustor 14 comprises at least one swirler assembly disposed within a housing, wherein the swirler assembly comprises at least three stages of vanes. The combustor 14 burns a mixture of compressed air (or any other oxygen source) and liquid and/or gaseous fuel to generate a high-energy combustion gas stream that drives the turbine assembly 16. While the type of fuel varies depending on the application, a few examples of fuel types include, but are not limited to, natural gas, diesel, bio-diesel, gasoline, kerosene, propane, methane, reformed fuels, products of gasification (e.g., hydrogen), and the like. For example, an integrated gasification combined cycle (IGCC) can be used to generate hydrogen that can be used as a fuel source that could be introduced at the respective stages.

It is to be understood that the gas turbine engine 10 can be modified, as understood by those skilled in the art, to include various other components that are typically employed in gas turbine engines. While components vary depending on the application, exemplary additional components include, but are not limited to, fuel injection systems, turbofan(s), ram ducts, valves, control systems (e.g., a computer), and the like.

Referring now to Figure 2, a cross sectional view of one embodiment of a swirler assembly 18 is illustrated. The swirler assembly 18 comprises a first stage of vanes 20, a second stage of vanes 22, and a third stage of 24. The first stage 20 is disposed in physical communication with a centerbody 26. The first stage 20 comprises a plurality of vanes 30. The number, shape, and position of the vanes 30 vary depending on the application. For example, the vanes 30 may be positioned at an angle with respect to a longitudinal axis through the center of the swirler assembly 18. In one embodiment, the vanes 30 may be positioned at an angle of about 40° to about 60° with respect to a longitudinal axis. Optionally, one or more vanes may comprise orifices suitable for fuel distribution and premixing. Moreover, orifices for pilot fuel injection can be used to increase flame stability.

The first stage 20 is disposed upstream of and in fluid communication with the second stage 22. Additionally, in one embodiment, the first stage 20 may be disposed in physical communication with the second stage 22. For example, the second stage 22 may be secured to the first stage 20 such that the second stage 22 radially extends outward from the first stage 20. An abrupt and/or continuous increase in the cross section after the first stage 20 can be used to stabilize the flame in the first stage 20. In one embodiment, the second stage of vanes 22 is mounted on a larger radius after the increase in the cross section. The second stage 22 comprises a plurality of vanes 32. The number, shape, and the like of vanes 32 can be the same or different than that of vanes 30. In one embodiment, the vanes 32 may be positioned an angle with respect to a longitudinal axis through the center of the swirler assembly 18. For example, the vanes 32 may be positioned at angle of about 40° to about 60° with respect to a longitudinal axis. Further, the vanes 32 may be positioned to generate co- or counter- swirl relative to the swirl produced by the vanes 30.

The second stage 22 is disposed upstream of and in fluid communication with the third stage 24. Additionally, in one embodiment, the third stage 24 may be disposed in physical communication with the second stage 22. The third stage 24 comprises a plurality of vanes 34. The number, shape, and position of the vanes 34 vary depending on the application. In one embodiment, the vanes 34 of the third stage 24 may be positioned an angle with respect to a longitudinal axis through the center of the swirler assembly 18. For example, the vanes 32 may be positioned at angle of about 40° to about 60° with respect to a longitudinal axis. The vanes 34 may be positioned to generate co- or counter-swirl relative to the swirl produced by the vanes 30 and/or the vanes 32.

A fuel injector 28 may be disposed in fluid communication with at least the first stage 20. In one embodiment, the fuel injector 28 is disposed in fluid communication with each of the first stage 20, the second stage 22, and/or the third stage 24. In other embodiments, a separated fuel injector may be employed at each stage, that is, a fuel injector can be employed at each of the first stage 20, the second stage 22, and the third stage 24. It is advantageously noted that by injecting fuel at a downstream location such as at the second stage 22 and/or the third stage 24 that each stage can be operated at a different air-to-fuel ratio.

In one embodiment, the stages are operated with increasing inert gas concentration by the premixing of the exhaust gas of the previous stage with fuel and air mixture of the next stage. The reduction of the oxygen concentration and the reduction of the flame temperatures by the appropriate selection of the air to fuel ratio lowers the propensity of NOₓ formation. Moreover, the axial staging of the vanes advantageously also allows fuel, oxygen, inert gas, and combinations comprising at least one of the foregoing to be introduced at the respective stages. Fuel can be selectively fed to one or more of the stages to obtain the desired emissions and turndown capability. A processing device such as a computer may be used to determine whether fuel should stop being supplied to a respective stage. The processor can be in operable communication with any suitable device to control fluid flow. In one embodiment, the device to control fluid flow is a valve disposed in operable communication with the respective stage, the fuel source, and the processor.

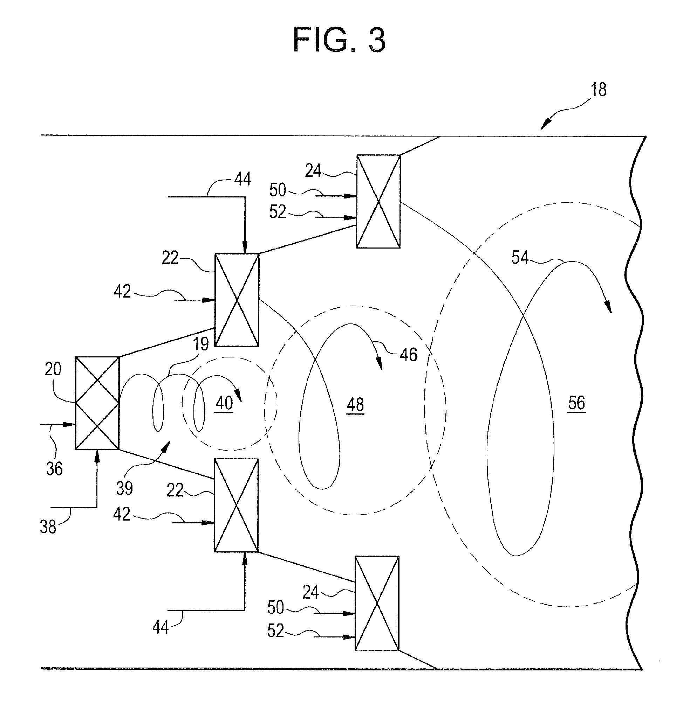

Referring now to Figure 3, a schematic illustration of a cross sectional view of the swirler assembly 18 taken along line 3-3 is illustrated. Each of the respective stages 20, 22, and 24 are schematically illustrated as a block-type configuration to highlight the positional relationships of the stages, the modes of operation of the swirler assembly, and various optional embodiments of the swirler assembly 18. The first stage 20 is disposed in fluid communication with a first oxygen source 36 and a first fuel source 38. While illustrated as two separate streams, it is to be understood that the first oxygen source 36 and the first fuel source 38 can be premixed and introduced to the first stage 20 as a single stream. The first oxygen source 36 includes any source of oxygen suitable for combustion including, but not limited to, air and compressed oxygen. Suitable fuels for the first fuel source 38 include, but are not limited to, those fuels listed above in relation to the gas turbine engine 10. The first stage 20 is disposed a sufficient distance upstream of the second stage 22 such that the hot combustion products and intermediates of a combustion zone 40 pre-heat air and/or fuel at the second stage 22.

In one embodiment, the first stage 20 can be operated close to lean blow out (LBO), thereby lowering NOₓ emissions. Additional fuel 39 can be employed to maintain a pilot flame at the first stage 20. Further, the first stage 20 acts to generate swirl of the fuel and the oxygen source, illustrated as swirling motion 19. In one mode of operation, the swirl 19 comprising the fuel and the oxygen source is combusted in the first combustion zone 40.

The second stage 22 is disposed in fluid communication with a second oxygen source 42 and/or a second fuel source 44. The second oxygen source 42 can be the same or different than the first oxygen source 36. Similarly, the second fuel source 44 can be the same or different than the first oxygen source 38. The second stage 22 acts to generate a swirl 46. The swirling flow 46 can comprise oxygen and/or fuel, which can be mixed with combustion products and intermediates from the combustion zone 40. It is to be understood that fuel and the like that is not combusted in the combustion zone 40 may also be mixed with the swirling flow 46. In one mode of operation, the swirl 46 comprises fuel from the second fuel source 44, which is combusted in a second combustion zone 48. As illustrated, the second combustion zone 48 and the first combustion zone 40 may overlap. Again, thermal energy from the first combustion zone 40 may be used to transfer heat to the second combustion zone 48. Without wanting to be bound by theory, this heat transfer advantageously allows the second combustion zone 48 to be operated flamelessly, which is sometimes referred to as flameless oxidation or mild combustion.

The third stage 24 is disposed in fluid communication with a third oxygen source 50 and/or a third fuel source 52. The third stage oxygen source 50 can be the same or different than the first oxygen source 36 or the second oxygen source 42. Similarly, the third fuel source 52 can be the same or different than the first oxygen source 36 or the second oxygen source 44. The third stage 24 acts to generate swirl 54. The swirl 54 can comprise oxygen and/or fuel, which can be mixed with combustion products from the second combustion zone 48. Again, it is to be understood that fuel and the like that is not combusted in the second combustion zone 48 may also be mixed with the swirling flow 54. In one mode of operation, the swirling flow 54 comprises fuel from the third fuel source 52, which is combusted in a third combustion zone 56. As illustrated, the second combustion zone 48 and the third combustion zone 56 may overlap. Thermal energy from the second combustion zone 48 may be used to transfer heat to the third combustion zone 56.

In other embodiments, inert gas (e.g., nitrogen gas) can be introduced at the second stage 22 and third stage 24. Furthermore, additional air can be added downstream of the first stage 20 to assist in carbon monoxide (CO) burnout. In yet other embodiments of operation, the combustor 14 can be operated as a rich-quench-lean combustor. More specifically, the first combustor can be operated fuel rich. The second stage 22 provides a stage where air can be introduced to quench the combustor. The third stage 24 can be operated in lean mode. This rich-quench-lean mode of operation can lead to a reduction of the NOx emissions.

It is to be understood that the swirler assembly 18 can comprise additional stages of vanes. The positioning of the stages relative to the first stage 20, the second stage 22, and the third stage 24 vary depending on the application. Additionally, while the second stage 22 and the third stage are illustrated as being parallel relative to the first stage, it is to be understood that other embodiments are envisioned where the second stage 22 and the third stage 24 are disposed at an angle relative to the first stage 20 and/or each other.

Additionally, while the combustors have been discussed as comprising a single swirler assembly for ease in discussion, it is to be understood that the combustors can comprise several swirler assemblies. The arrangement of the swirler assemblies varies depending on the application. For example, in a can-annular arrangement, each "can" comprises at least one swirler. When multiple swirler assemblies are employed, the swirler assemblies may also be staged.

Advantageously, axial staging in combination with swirl to burn fuel leads to lower emissions and increased turndown and stability characteristics, when compared to combustors that do not employ this combination. For example, axial staging allows turndown capability, since fuel could be "turned-off" in successive stages. By not supplying fuel in the successive stages, the combustor can be operated under lower load conditions.

Additionally, the axial staging of the vanes leads to preheating of the air for downstream stages, which can lead to flameless oxidation or mild combustion. Further, flame stabilization can also be achieved under leaner conditions in downstream stages compared to upstream stages as a result of preheating of the air. The leaner operations are associated with an increased reduction in NOₓ emissions. Further, staging can be used to reduce wall quenching and enhanced CO burnout. Other advantages include a reduction in size of the combustor compared to systems that do not employ the combination of axial staging and swirl.

## Claims

1. A method of reducing emissions in a gas turbine engine (10), the method comprising:
generating a swirling flow with a first oxygen source and a first fuel within a combustor (14);
combusting the first fuel using the first oxygen source to produce combustion products within the combustor (14);
generating a swirling flow with a second oxygen source and a second fuel and mixing with the combustion products;
combusting the second fuel using the second oxygen source to produce second combustion products within the combustor (14); and
generating a swirling flow with a third oxygen source and a third fuel and mixing with the second combustion products.

2. The method of Claim 1, further comprising:
using a first stage (20) of a swirler assembly disposed within the combustor (14) to generate the swirl of the first oxygen source and the first fuel, wherein the first stage (20) comprises a first plurality of vanes (30);
using a second stage (22) of the swirler assembly to generate the swirl of the second oxygen source and the second fuel, wherein the second stage (22) is disposed downstream of and in fluid communication with the first stage (20) and wherein the second stage (22) comprises a second plurality of vanes (32); and
using a third stage (24) of the swirler assembly to generate the swirl of the third oxygen source and the third fuel, wherein the third stage (24) is disposed downstream of and in fluid communication with the second stage (22) and wherein the third stages (24) comprises a third plurality of vanes (34).

3. The method of Claim 2, wherein the first stage (20), second stage (22), and third stage (24) are co-axially aligned.

4. The method of Claim 2 wherein the first vanes (30), the second vanes (32), and the third vanes (34) are positioned at an angle with respect to a longitudinal axis through a center of the swirler assembly.

5. The method of any one of Claims 2 to 4, wherein the second stage (22) is disposed in physical communication with the first stage (20) and the third stage (24).

6. The method of any one of Claims 2 to 5, further comprising controlling a flow of the second fuel to the second stage (22).

7. A combustor for a gas turbine engine (10) comprising:
a housing ;
a swirler assembly (18) disposed in physical communication with the housing, wherein the swirler assembly (18) comprises:
a first stage (20) comprising a plurality of first vanes (30);
a second stage (22) comprising a plurality of second vanes (32), wherein the second stage (22) is disposed downstream of, in fluid communication with, and in physical communication with the first stage (20); and
a third stage (24) comprising a plurality of third vanes (34), wherein the third stage (24) is disposed downstream of, in fluid communication with, and in physical communication with the second stage (22); and
a fuel injector disposed in fluid communication with the first stage (20), a second fuel injector disposed in fluid communication with the second stage (22), and a third fuel injector disposed in fluid communication with the third stage (24).

8. The combustor of Claim 7, wherein the first stage (20), second stage (22), and third stage (24) are co-axially aligned.

9. The combustor of Claim 7, wherein the first vanes (30), the second vanes (32), and the third vanes (34) are positioned at an angle with respect to a longitudinal axis through a center of the swirler assembly (18).

10. The combustor of any one of Claims 7 to 9, wherein the combustor (14) is an annular type combustor or a can-annular type combustor.
